# FASCICULE DE BREVET EUROPEEN

(11) **EP 3 576 978 B1**
(45) Date de publication et mention de la délivrance du brevet: **20.10.2021**
(21) Numéro de dépôt: 17828993.0
(22) Date de dépôt: 21.12.2017
(51) Int. Cl.: B60N 2/58, B60N 2/70

(54) **COIFFE D'HABILLAGE POUR GARNITURE D'ASSISE OU DE DOSSIER DE SIÈGE DE VÉHICULE AUTOMOBILE**
BEZUG FÜR EIN FAHRZEUGSITZPOLSTER ODER LEHNENPOLSTER
COVER FOR THE UPHOLSTERY OF THE SEAT OR BACKREST OF A VEHICLE SEAT

(30) Priorité: 31.01.2017 FR 1750765
(43) Date de publication de la demande: 11.12.2019
(73) Titulaire: PSA Automobiles SA, 78300 Poissy (FR)
(72) Inventeur: HANSEN, Gael, 78390 Bois d'Arcy (FR)
(86) Numéro de dépôt international: PCT/FR2017/053758
(87) Numéro de publication internationale: WO 2018/142035

(56) Documents cités:
- WO-A1-03/072391
- DE-U1- 9 117 081
- FR-A1- 2 815 901

## Description

### Domaine de l'invention

La présente invention se rapporte d'une manière générale au domaine des garnitures pour assises et dossiers de sièges de véhicules automobiles.

Elle concerne plus particulièrement une coiffe d'habillage pour une telle garniture d'assise ou de dossier.

### Arrière-plan de l'invention

L'assise et le dossier d'un siège de véhicule automobile comportent classiquement une armature recouverte d'une garniture.

Une telle garniture se présente généralement sous la forme d'une matelassure interne revêtue d'une coiffe d'habillage.

Destinée à assurer le confort dynamique du passager, la matelassure est constituée le plus souvent par un bloc de mousse de polyuréthane généralement moulé selon la forme finale souhaitée pour l'élément de siège.

Afin de respecter les exigences normatives en termes de fatigue dynamique et d'amortissement des vibrations subies par le siège, les mousses de polyuréthanne utilisées doivent présenter une densité et une portance suffisamment élevées pour assurer une bonne résistance à la compression et éviter au passager de s'affaisser dans le siège, y compris lorsqu'il y demeure assis pendant plusieurs heures durant de longs trajets.

Ce bloc de mousse est d'abord monté sur l'armature d'assise ou de dossier du siège puis revêtu ensuite d'une coiffe d'habillage constituée d'un revêtement externe en textile (tissé ou non), en cuir ou en matière synthétique. La souplesse de la coiffe lui permet de s'adapter à la forme donnée à la matelassure, en particulier aux éventuels rappels de style définis par la matelassure.

Ce type de garniture a cependant pour inconvénient de présenter une certaine raideur d'approche pour le passager au moment de son installation sur le siège.

Afin d'obtenir un rendu visuel amélioré, il est connu de prévoir au niveau de la coiffe d'habillage une fine couche de mousse de faible épaisseur qui est rapportée par couture sur la face interne du revêtement externe afin de le maintenir en permanence tendu.

On connait également de la demande de brevet américaine US 2016/0031350 une coiffe d'habillage comprenant deux couches superposées de mousse rapportées par couture sur la face interne d'un revêtement externe.

Cette ou ces couches supplémentaires de mousse de faibles épaisseurs ne participent toutefois pas à l'amélioration du confort d'approche pour le passager.

On connait également de la demande de brevet française FR 2 864 483, d'autres types de garnitures d'assises de siège dont la matelassure est constituée de deux couches de mousse superposées, à savoir :
- une couche supérieure de confort réalisée dans une mousse souple de polyuréthane ; et
- une couche inférieure réalisée dans une mousse viscoélastique à haute densité (environ 100 kg/m³) se rigidifiant en fonction de la vitesse à laquelle elle est comprimée par le passager du siège.

WO 03/072391 divulgue une coiffe d'habillage pour siège de véhicule.

Le confort procuré par ce type de garniture est toutefois encore inférieur à celui qu'offrent les garnitures traditionnelles, notamment en hiver du fait du fort durcissement de la mousse visco-élastique à basse température.

### Objet et résumé de l'invention

La présente invention vise donc à améliorer le confort de l'assise et/ou du dossier d'un siège de véhicule automobile.

Elle propose à cet effet une coiffe d'habillage pour garniture d'assise ou de dossier de siège de véhicule automobile, et comportant un revêtement externe en textile, en cuir ou en matière synthétique contre la face intérieure de laquelle est rapportée une couche de mousse de polyuréthanne ;
caractérisée en ce que ladite couche de mousse présente une épaisseur d'au moins 10 mm, ainsi qu'une densité comprise entre 25 et 50 kg/m3 et une portance comprise entre 3,5 et 6 kPa.

La présence, au niveau de la coiffe d'habillage, d'une telle couche de mousse de polyuréthane permet d'améliorer très sensiblement le confort d'approche du passager qui, lorsqu'il prend appui contre une assise et ou un dossier selon l'invention ressent un premier contact moelleux et enveloppant dû à l'écrasement temporaire de cette couche de mousse.

Selon des caractéristiques préférées de ladite coiffe d'habillage :
- ladite couche de mousse présente une épaisseur comprise entre 12 et 20 mm ; et/ou
- ledit revêtement externe (16 ; 26) et ladite couche de mousse (17 ; 27) sont reliés par une pluralité de lignes de coutures (18 ; 28).

L'invention vise également sous un deuxième aspect une garniture d'assise ou de dossier de siège pour véhicule automobile comportant une matelassure interne recouverte d'une telle coiffe d'habillage.

Selon des caractéristiques préférées de ladite garniture :
- ladite matelassure présente une épaisseur comprise entre 40 et 80 mm ; et/ou
- ladite matelassure est constituée par un bloc de mousse en polyuréthanne présentant une densité supérieure ou égale à 40 kg/m³ et une portance comprise entre 4 et 8 kPa.

L'invention vise également sous un troisième aspect une assise de siège comportant une telle garniture dont la matelassure présente avantageusement une densité comprise entre 60 et 75 kg/m³.

L'invention vise enfin sous un quatrième aspect un dossier de siège comportant une telle garniture dont la matelassure présente avantageusement une densité comprise entre 40 et 55 kg/m³.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en éclaté en perspective d'un siège de véhicule automobile doté d'une garniture d'assise et d'une garniture de dossier selon l'invention ;
- la figure 2 est une vue en coupe longitudinale du siège de la figure 1 ; et
- la figure 3 représente une vue de dessus du siège de la figure 1.

### Description détaillée d'un mode préféré de réalisation

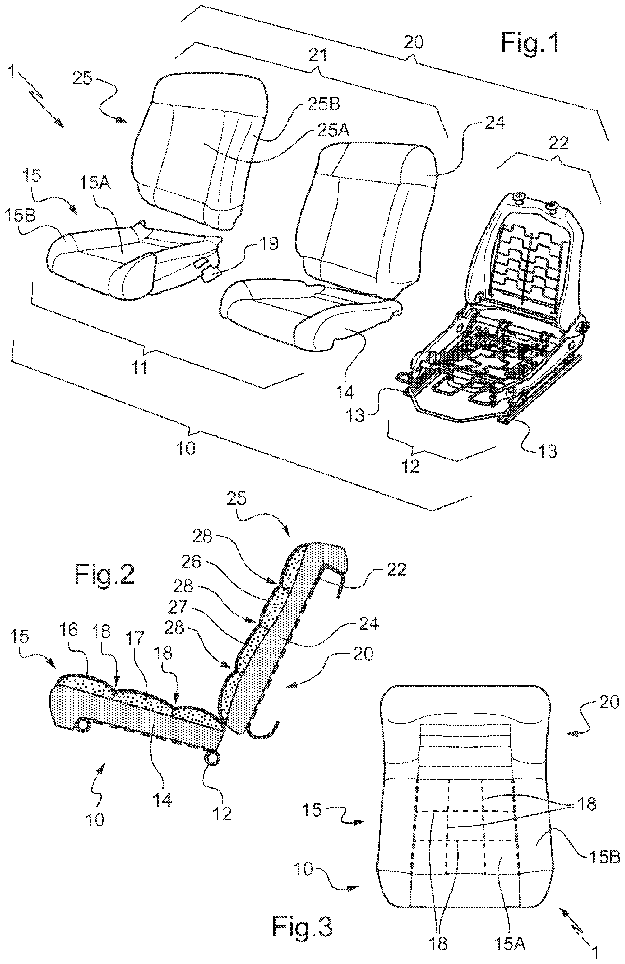

Les figures 1 à 3 représentent un siège 1 de véhicule automobile comportant une assise 10 sur laquelle est monté à pivotement autour d'un axe transversal un dossier 20 éventuellement surmonté d'un appuie-tête non représenté.

Comme illustré par la vue éclatée de la figure 1, l'assise 10 et le dossier 20 comprennent chacun une garniture 11, 21 fixée sur une armature correspondante 12, 22, généralement métallique et sur laquelle est tendue une nappe de suspension élastique non représentée.

L'armature 12 de l'assise 10 peut éventuellement être amarrée à coulissement sur le plancher du véhicule par l'intermédiaire d'un couple de glissières 13.

Chaque garniture 11, 21 se compose d'une matelassure interne 14, 24 recouverte d'une coiffe d'habillage 15, 25.

Les matelassures 14, 24 de l'assise 10 et du dossier 20 sont constituées par un bloc moulé de mousse de polyuréthane présentant une épaisseur comprise entre 40 et 80 mm et une densité supérieure ou égale à 40 kg/m³.

L'utilisation d'une telle mousse dite dynamique pour les matelassures 14, 24 permet d'assurer un excellent amortissement des vibrations transmises à l'assise et au dossier du siège pendant les phases de roulage du véhicule.

Le bloc de mousse, constituant la matelassure 14 de l'assise 10 destinée à supporter la majeure partie de la masse du passager, présente avantageusement une densité supérieure à celle du bloc de mousse 24 constituant la matelassure du dossier 20.

Plus précisément, la densité du bloc de mousse formant la matelassure 14 de l'assise 10 sera de préférence comprise entre 60 et 75 kg/m³, tandis que celle du bloc de mousse formant la matelassure 24 du dossier 20 sera de préférence comprise entre 40 et 55 kg/m³.

Les blocs de mousse 14, 24 présentent en outre une portance ou dureté comprise entre 4 et 8 kPa, de sorte à assurer une résistance à la compression suffisante pour éviter au passager de s'affaisser dans le siège 1, y compris lorsqu'il y demeure assis pendant plusieurs heures durant de longs trajets.

On précise que la portance telle que mentionnée dans le paragraphe précédent et dans la suite de cette demande correspond à la pression nécessaire pour compresser la mousse de 40% de son épaisseur initiale tel que défini par la norme internationale DIN EN ISO 2439.

En variante, les matelassures 14, 24 (et en particulier celle d'assise 14) peuvent comprendre un ou plusieurs inserts de mélamine ou de mousse viscoélastique ménagés à l'intérieur du bloc de mousse de polyuréthanne afin d'améliorer localement la portance.

Comme illustré par la figure 1, les coiffes d'habillage 15, 25 respectivement de l'assise 10 et du dossier 20 comprennent chacune un médaillon central 15A, 25A, sensiblement plan, entouré, au moins partiellement, d'une zone périphérique 15B, 25B de forme convexe, de sorte à former un bossage périphérique de maintien de l'occupant du siège.

Ces coiffes 15, 25 sont chacune formées par un revêtement externe 16, 26 contre la face intérieure de laquelle est rapportée par couture une couche de mousse de polyuréthane 17, 27 (figure 2).

Afin d'éviter l'apparition de plis sur le revêtement externe 16, 26 au niveau du médaillon central et d'améliorer le rendu visuel, ce revêtement externe 16, 26 et la couche de mousse 17, 27 sont reliés au niveau de ce médaillon par une pluralité de lignes de coutures rectilignes 18, 28 s'étendant perpendiculairement de sorte à définir un motif décoratif en forme de quadrillage (figures 2 et 3).

Selon certaines variantes, les lignes de coutures peuvent bien évidemment présenter des profils différents définissant d'autres motifs décoratifs.

Selon d'autres variantes de l'invention, ces couches de mousse 17, 27 peuvent être rapportées par collage ou thermo-soudage contre les faces intérieures des revêtements externes 16, 26.

Ces revêtements externes 16, 26, réalisés en textile (tissé ou non), en cuir ou en matière synthétique, présentent une épaisseur avantageusement comprise entre 0,5 et 2 mm, tandis que celle des couches de mousse 17, 27 est au mois égale à 10 mm et de préférence comprise entre 12 et 20 mm.

La couche de mousse 17 de la coiffe d'habillage 15 de l'assise 10 présente une densité et une portance inférieure à celles du bloc de mousse formant la matelassure 14 de cette assise 10.

Il en est de même pour la couche de mousse 27 de la coiffe d'habillage 25 du dossier 20 vis-à-vis de la mousse formant la matelassure 24 de ce dossier 20.

De préférence, les couches 17 et 27 sont formées par une mousse identique présentant une densité comprise entre 25 et 50 kg/m³ et une portance comprise entre 3,5 et 6 kPa.

L'utilisation d'une telle mousse pour les coiffes d'habillage 15, 25 permet d'améliorer très sensiblement le confort d'approche du passager.

Au moment de s'assoir sur le siège, ce passager va en effet ressentir un premier contact moelleux et enveloppant dû à l'écrasement temporaire de ces couches de mousse 17 et 27 au niveau de l'assise 10 et du dossier 20.

Le fait d'utiliser au niveau des coiffes 17, 27 des couches de mousse plus épaisses que celles utilisées dans l'art antérieur permet en outre d'obtenir, en association avec les lignes de coutures 18, 28, un effet matelassé marqué qui évite l'apparition de plis et améliore la qualité perçue du siège en suggérant le confort.

Afin de permettre son rembordement sur l'armature correspondante 12, 22, chaque coiffe 15, 25 présente en outre des profilés de fixations tels que 19 cousus le long de son pourtour périphérique et destinés à coopérer avec des moyens complémentaires prévus sur cette armature.

Afin d'assurer une bonne tenue de chaque coiffe 15, 25 sur la matelassure correspondante 14, 24, des moyens de rappel non représentés sont prévus sur les coiffes 15, 25 pour coopérer avec des moyens complémentaires ménagés dans les matelassures 14, 24.

Ces moyens de rappel, bien connus de l'homme du métier, sont par exemple constitués par des bandes de toile dont une première extrémité est repliée puis cousue sur l'envers de la coiffe au niveau des lignes longitudinales de jonction entre le médaillon central et les zones périphériques (ces lignes de jonction étant représentées en pointillés sur la figure 3), tandis que leur seconde extrémité est solidaire d'une tige rigide apte à être fixée sur une tringle métallique correspondante noyée dans la matelassure.

Pour ce faire, la bande de toile est passée au travers d'une tranchée ménagée dans la matelassure puis étirée de sorte à l'amener à proximité de la tringle, ce qui a pour effet de tendre la coiffe et de comprimer la matelassure.

La tige rigide est ensuite fixée à la tringle à l'aide d'agrafes de type « nez de porc », le relâchement de la bande de toile entrainant alors la détente partielle de la matelassure et de la coiffe.

On notera que l'absence de moyens de rappel au niveau des médaillons centraux 15A, 25A des coiffes 15, 25 permet d'éviter l'apparition de points durs sur la surface de ces médaillons accueillant respectivement le postérieur et le dos du passager, de sorte à ne pas détériorer le confort.

En variante, les moyens de rappel peuvent être différents et par exemple conformes à ceux décrits dans la demande française FR 2 967 949, ou bien encore comporter des bandes mâles de Velcro^{®} cousues sur l'envers de la coiffe et coopérant avec des bandes femelles à boucles ménagées dans les tranchées de la matelassure.

On rappelle enfin que la présente invention ne se limite pas aux formes de réalisation décrites et représentées, mais qu'elle englobe toute autre variante d'exécution à la portée de l'homme du métier.

## Revendications

1. Coiffe d'habillage pour garniture d'assise (10) ou de dossier (20) de siège de véhicule automobile, et comportant un revêtement externe en textile, en cuir ou en matière synthétique (16 ; 26) ; **caractérisé en ce qu'**une couche de mousse de polyuréthanne (17 ; 27) est rapportée contre la face intérieure de ladite coiffe,
et **en ce que** ladite couche de mousse (17 ; 27) présente une épaisseur d'au moins 10 mm, ainsi qu'une densité comprise entre 25 et 50 kg/m3 et une portance comprise entre 3,5 et 6 kPa.

2. Coiffe d'habillage selon la revendication 1, **caractérisée en ce que** ladite couche de mousse présente une épaisseur comprise entre 12 et 20 mm.

3. Coiffe d'habillage selon l'une des revendications 1 ou 2, **caractérisée en ce que** ledit revêtement externe (16 ; 26) et ladite couche de mousse (17 ; 27) sont reliés par une pluralité de lignes de coutures (18 ; 28).

4. Garniture d'assise ou de dossier de siège pour véhicule automobile comportant une matelassure interne (14 ; 24) recouverte d'une coiffe d'habillage (15 ; 25), **caractérisée en ce que** ladite coiffe (15 ; 25) est conforme à l'une des revendications 1 à 3.

5. Garniture d'assise ou de dossier de siège selon la revendication 4, **caractérisée en ce que** ladite matelassure (14 ; 24) présente une épaisseur comprise entre 40 et 80 mm.

6. Garniture d'assise ou de dossier de siège selon l'une des revendications 4 ou 5, **caractérisée en ce que** ladite matelassure (14 ; 24) est constituée par un bloc de mousse en polyuréthanne présentant une densité supérieure ou égale à 40 kg/m³ et une portance comprise entre 4 et 8 kPa.

7. Assise de siège **caractérisée en ce qu'**elle comporte une garniture (11) selon l'une des revendications 4 à 6.

8. Assise de siège selon la revendication 7, **caractérisée en ce que** la matelassure (14) de ladite garniture (11) présente une densité comprise entre 60 et 75 kg/m³.

9. Dossier de siège **caractérisé en ce qu'**il comporte une garniture (21) selon l'une des revendications 4 à 6.

10. Dossier de siège selon la revendication 9, **caractérisé en ce que** la matelassure (24) de ladite garniture (21) présente une densité comprise entre 40 et 55 kg/m³.

## Patentansprüche

1. Verkleidungskappe für Sitzgarnitur (10) oder Rückenlehne (20) eines Kraftfahrzeugsitzes, mit einer Außenbeschichtung aus Textil, Leder oder Kunststoff (16; 26), **dadurch gekennzeichnet, dass** eine Polyurethanschaumschicht (17; 27) an der Innenseite der Kappe angebracht ist und dass die Schaumschicht (17; 27) eine Dicke von mindestens 10 mm und eine Dichte von 25 bis 50 kg/m3 und eine Tragfähigkeit von 3,5 bis 6 kPa aufweist.

2. Verkleidungshaube nach Anspruch 1, **dadurch gekennzeichnet, dass** die Schaumschicht eine Dicke zwischen 12 und 20 mm aufweist.

3. Verkleidungshaube nach einem der Ansprüche 1 oder 2, **dadurch gekennzeichnet, dass** die Außenverkleidung (16; 26) und die Schaumschicht (17; 27) durch eine Vielzahl von Nahtlinien (18; 28).

4. Sitzbezug - oder Rückenlehnenverkleidung für Kraftfahrzeuge mit einer Innenmatte (14; 24) mit einer Verkleidungshaube (15; 25), **dadurch gekennzeichnet, dass** die Kappe (15; 25) einem der Ansprüche 1 bis 3 entspricht.

5. Sitzbezug oder Rückenlehnenpolster nach Anspruch 4, **dadurch gekennzeichnet, dass** das Polster (14; 24) eine Dicke zwischen 40 und 80 mm aufweist.

6. Sitzbezug oder Rückenlehnenbezug nach einem der Ansprüche 4 oder 5, **dadurch gekennzeichnet, dass** die Matratze (14; 24) besteht aus einem Block aus Polyurethanschaum mit einer Dichte von 40 kg/m3 oder mehr und einem Auftrieb von 4 bis 8 kPa.

7. Sitzfläche, **dadurch gekennzeichnet, dass** sie eine Dichtung (11) nach einem der Ansprüche 4 bis 6 aufweist.

8. Sitzfläche nach Anspruch 7, **dadurch gekennzeichnet, dass** die Polsterung (14) der Dichtung (11) eine Dichte zwischen 60 und 75 kg/m3 aufweist.

9. Rückenlehne, **dadurch gekennzeichnet, dass** sie eine Dichtung (21) nach einem der Ansprüche 4 bis 6 aufweist.

10. Rückenlehne nach Anspruch 9, **dadurch gekennzeichnet, dass** die Polsterung (24) der Dichtung (21) eine Dichte zwischen 40 und 55 kg/m3 aufweist.

## Claims

1. Coating cap for seat (10) or seat back (20) of a motor vehicle seat, and having an outer covering of textile, leather or synthetic material (16 ; 26) **characterized in that** a layer of polyurethane foam (17 ; 27) is brought against the inner face of said cap, and **in that** said foam layer (17 ; 27) has a thickness of at least 10 mm and a density of between 25 and 50 kg/m3 and a lift of between 3.5 and 6 kPa.

2. Coating cap according to claim 1, **characterized in that** said foam layer has a thickness of between 12 and 20 mm.

3. Coating cap according to one of claims 1 or 2, **characterized in that** said outer cover (16); 26) and said foam layer (17 ; 27) are connected by a plurality of seam lines (18 ; 28).

4. Seat or seat back fitting for a motor vehicle with a padding (14 ; 24) covered with a cover cap (15 ; 25), **characterized in that** said cap (15 ; 25) is in accordance with one of claims 1 to 3.

5. Seat or seat back liner according to claim 4, **characterized in that** said padding (14 ; 24) has a thickness of between 40 and 80 mm.

6. Seat or seat back liner according to one of claims 4 or 5, **characterized in that** said padding (14 ; 24) consists of a block of polyurethane foam having a density of 40 kg/m3 or more and a lift of between 4 and 8 kPa.

7. Seat, **characterized in that** it comprises a padding (11) according to one of claims 4 to 6.

8. Seat according to claim 7, **characterized in that** the padding (14) of said trim (11) has a density of between 60 and 75 kg/m3.

9. Seat back, **characterized in that** it comprises a trim (21) according to one of claims 4 to 6.

10. Seat back according to claim 9, **characterized in that** the padding (24) of said trim (21) has a density of between 40 and 55 kg/m3.
